(19) Europäisches Patentamt
European Patent Office
Office européen des brevets

(11) **EP 2 300 739 B1**

## (12) EUROPÄISCHE PATENTSCHRIFT

(45) Veröffentlichungstag und Bekanntmachung des Hinweises auf die Patenterteilung:
**18.01.2012 Patentblatt 2012/03**

(21) Anmeldenummer: **09779897.9**

(22) Anmeldetag: **23.06.2009**

(51) Int Cl.:
*F16J 3/02* (2006.01)  *G01L 7/08* (2006.01)

(86) Internationale Anmeldenummer:
**PCT/EP2009/057824**

(87) Internationale Veröffentlichungsnummer:
**WO 2010/006898 (21.01.2010 Gazette 2010/03)**

(54) **DRUCKMITTLER UND DRUCKMESSGERÄT MIT EINEM SOLCHEN DRUCKMITTLER**

CHEMICAL SEAL AND PRESSURE MEASURING DEVICE HAVING SUCH A SEAL

SYSTÈME DE TRANSMISSION DE PRESSION ET APPAREIL DE MESURE DE PRESSION ÉQUIPÉ D UN TEL SYSTÈME

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **16.07.2008 DE 102008033337**

(43) Veröffentlichungstag der Anmeldung:
**30.03.2011 Patentblatt 2011/13**

(73) Patentinhaber: **Endress+Hauser GmbH+Co. KG 79689 Maulburg (DE)**

(72) Erfinder:
• **GETMAN, Igor**
**79539 Lörrach (DE)**
• **FUNKEN, Dieter**
**79539 Lörrach (DE)**

(74) Vertreter: **Andres, Angelika Maria**
**Endress + Hauser (Deutschland) Holding GmbH, PatServe**
**Colmarer Strasse 6**
**79576 Weil am Rhein (DE)**

(56) Entgegenhaltungen:
**EP-A- 1 114 987    DE-A1- 10 031 120**
**US-A- 3 187 641**

• **CHRISTIAN WOHLGEMUTH: "Entwurf und galvanotechnische Fertigung metallischer Trennmembranen für mediengetrennte piezoresistive Drucksensoren"[Online] XP002545234 Gefunden im Internet: URL:http:// tuprints.ulb.tu-darmstadt.de/10 09/3/Entwurf_ von_Trennmembranen.pdf> [gefunden am 2008-03-07]**

**Beschreibung**

Die vorliegende Erfindung betrifft eine Trennmembran für einen Druckmittler sowie einen Druckmittler mit einer solchen Membran bzw. ein Druckmessgerät das einen solchen Druckmittler aufweist.

Druckmittler dienen dazu, den Druck eines Messmediums über einen hydraulischen Pfad zu einem Drucksensor zu übertragen. Hierzu weist ein Druckmittler gewöhnlich einen Druckmittlerkörper auf, an dem eine Trennmembran unter Ausbildung einer Druckmittierkammer zwischen der Trennmembran und dem Druckmittlerkörper mittels einer umlaufenden Fügestelle druckdicht befestigt ist. Von der Druckmittlerkammer erstreckt sich ein hydraulischer Pfad durch den Druckmittlerkörper zu den Drucksensor, um diesen mit einem Mediendruck zu beaufschlagen, dem die Trennmembran auf ihrer der Druckmittler abgewandten Außenseite ausgesetzt ist.

Die in dem hydraulischen Pfad und der Druckmittlerkammer eingeschlossene Übertragungsflüssigkeit, die meistens ein Öl umfasst, bewirkt aufgrund der temperaturabhängigen Volumenausdehnung eine veränderliche Lage der Trennmembran. Hierbei ist zu beachten, dass gängige Drucksensoren, beispielsweise Halbleitersensoren oder Kapazitivsensoren eine äußerst geringe druckabhängige Auslenkung ihres Messelements aufweisen, so dass es im Messbereich der Druckmessgeräte allenfalls zu vernachlässigbaren druckabhängigen Volumenverschiebungen der Übertragungsflüssigkeit kommt, und die aufgrund der Temperatur bestimmte Lage der Trennmembran deren tatsächliche Position für den Messbetrieb in erster Nährung gut beschreibt.

Insoweit, als eine Trennmembran ein elastisches Bauelement ist, bewirkt die Auslenkung der Trennmembran bei der Verschiebung ihrer Lage einen zusätzlichen Druck dp zwischen dem auf der Außenseite der Trennmembran anstehenden Messdruck px und dem Kammerdruck pk in der Druckmittlerkammer. Dieser Druck dp = px-pk kann insbesondere bei kleinen Messbereichen die Messfehler des eigentlichen Drucksensors bei weitem übersteigen.

Auf den Absolutwert von dp = px - pk kommt es eigentlich nicht an. Denn wäre dieser Wert konstant, dann könnte er bei einer Messung gut kompensiert werden. Das Problem besteht darin, dass sich dp mit der Auslenkung der Trennmembran ändert, und dass die Größe der Änderungen mit der Größe des Absolutwerts von dp zunimmt.

Daher gibt es zahlreiche Ansätze, den Druck dp zu minimieren.

In der Industriellen Prozessmesstechnik haben sich insbesondere Trennmembranen mit einem aufgeprägten Wellenmuster durchgesetzt. Diese Membranen sind zwar am bei kleinen Auslenkungen steifer als ebene Membranen ermöglichen aber insgesamt größere Auslenkungen.

Das deutsche Patent DE19946234C1 offenbart eine Membran für einen Druckmittler, die eine kreisförmige Zentralfläche und am Rand eine Randfläche zum einspannen hat, die beide über konzentrisch zueinander angeordnete und in Achsrichtung zueinander versetzte Ringflächen in Form von Stufen miteinander verbunden sind, wobei die einzelnen Ringflächen gegenüber einer Ebene parallel zur Membranebene abwechselnd radial auswärts bzw. radial einwärts geneigt sind, wobei jeder der Ringflächen mit einem Radius abgerundet über eine Stufe zur nächsten Ringfläche übergeht. Diese Gestaltung der Trennmembran soll bewirken, dass die durch Wärmeausdehnungen bedingten Bewegungen der Trennmembran, also die Veränderung ihrer Gleichgewichtslage, der durch die Volumenausdehnung der Übertragungsflüssigkeit bedingten Verschiebung des Arbeitspunktes der Trennmembran entspricht.

Ein ähnlicher Ansatz ist in der Offenlegungsschrift DE10031120A1 offenbart, wonach die Temperaturausdehnungskoefizienten einer Trennmembran und eines Grundkörpers, an dem die Trennmembran befestigt ist, sowie der Temperaturausdehnungskoefizient des Druckübertragungsmediums derart aufeinander abgestimmt sind, dass eine thermisch bedingte Volumenänderung der Übertragungsflüssigkeit durch eine Verschiebung der Ruhelage der Trennmembran in der Druckmittlerkammer zwischen der Trennmembran und dem Druckkörper aufgenommen werden kann.

Die beiden beschriebenen Ansätze sind theoretisch sehr interessant, aber für die Praxis nur sehr eingeschränkt tauglich, denn sie setzen ein Temperaturgleichgewicht zwischen der Übertragungsflüssigkeit, der Trennmembran und dem Druckmittlerkörper voraus. Diese Annahme ist für die meisten Anwendungen in der Prozessmesstechnik nicht erfüllt, sodass die beschriebenen Anordnungen bei Temperatursprüngen sogar größere Messfehler bewirken können als Druckmessanordnungen mit herkömmlichen Trennmembranen ohne eine temperaturabhängige Steuerfunktion.

Ein anderer Gesichtspunkt des Drucks aufgrund der Trennmembranauslenkung ist in der europäischen Patentschrift EP1114987B1 berücksichtigt. In diesem Dokument geht es nicht darum, den Beitrag der Trennmembran zum Druck verschwinden zu lassen, sondern ihn stattdessen zu iinearisieren. Hierzu wird eine Membran vorgeschlagen, die ringförmige Trapezflächen aufweist, die jeweils über Abschrägungen von 45° miteinander verbunden sind.

Der Linearisierung des Drucks p(T) liegt der Gedanke zugrunde, dass dann bei Kenntnis der Temperatur eine einfache Kompensation des Drucks p(T) möglich sein soll. Die Bestimmung der effektiven Temperatur, welche das tatsächliche Volumen der Übertragungsflüssigkeit definiert, ist jedoch in den allermeisten Fällen, in denen kein Temperaturgleichgewicht gegeben ist, extrem aufwendig.

Ein völlig anderer Ansatz wird in der Offenlegungsschrift DE102005023021A1 offenbart, wonach ein Druckmittler eine Trennmembran mit mindestens zwei Gleichgewichtslagen aufweist, und wobei der Arbeitspunkt des Druckmittlers für den in Frage kommenden Temperaturbereich stets zwischen diesen beiden Gleichgewichtslagen liegen soll.

Dies bedeutet jedoch, dass die Trennmembran bistabil ist, und ein Schnappscheibenverhalten zeigen kann, wie es beispielsweise in der DE 10152681 A1 diskutiert ist.

In der DE 102005023021A1 wird beschrieben, dass die Membran zunächst mit einem Wellenmuster geprägt wird, wobei die ringförmigen Wellen alternierend Höhe H1 und H2 aufweisen, und die Membran anschließend mit einem Stempel axial gestaucht wird, wobei durch die Stauchung Material von den Wellenzügen mit der größeren Höhe H1 radial zu den Wellenzügen mit der geringeren Höhe H2 verschoben wird. Dies soll bewirken, dass der innere Bereich der Trennmembran wenigstens zwei verschiedene Ruhepositionen einnehmen kann. Es soll dann im Idealfall exakt diejenige Menge an Druck mit der Flüssigkeit verwendet werden, mit welcher im wesentlichen keine Rückstellkraft in Richtung einer der beiden Ruhepositionen wirkt, da sich die Membran bei diesem Arbeitspunkt wie eine richtkraftlose Membran verhält. Diese Idee ist auf den ersten Blick interessant, sie verkennt jedoch, dass diese Bedingung der Richtkraftlosigkeit eben nur exakt in den Gleichgewichtslagen erfüllt ist und dass die Membran zwischen den Gleichgewichtslagen immer der energetisch günstigsten, nächsten Gleichgewichtslage zustreben wird, was für den Druck p ein Hysterese- bzw. Schnappscheiben-Verhalten zur Folge haben kann.

Bei der herrschenden Vielfalt an Durchmessern und Materialstärken von Trennmembranen mit unterschiedlichsten Abmessungen und Prägemustern ist es üblich, zum Vergleich der Leistungsfähigkeit einen folgendermaßen definierten dimensionslosen Druck p zu verwenden:

$$p := \frac{q \cdot a^4}{E \cdot h^4} \qquad (1),$$

Hierbei ist q der zuvor mit dp bezeichnete Druck aufgrund einer Auslenkung der Trennmembran, h deren Materialstärke, a ihr Radius und E der Elastizitätsmodul des Materials der Trennmembran.

Der dimensionslose Druck p kann insbesondere als Funktion einer dimensionslosen Auslenkung w dargestellt werden wobei w definiert ist als w := y/h, wobei y eine Länge ist, die von der Volumenänderung V der Übertragungsflüssigkeit abhängig ist, welche die Auslenkung der Trennmembran bewirkt hat.

Zweckmäßig ist hier eine Abschätzung von y als Höhe eines Kegels, dessen Grundfläche gleich der beweglichen Fläche der Trennmembran entspricht und dessen Volumen gleich der Volumenänderung von V ist, also:

$$w := \frac{1}{h} \cdot \frac{3 \cdot V}{\pi \cdot a^2} \qquad (2),$$

Es soll noch einmal ausdrücklich betont werden, dass der Auslenkung y und der daraus abgeleiteten Größe w keine direkt messbare Länge an der Trennmembran zuzuordnen sein muss. Es ist lediglich ein einfaches volumenproportionales Längenmaß um eine Basis für die Vergleichbarkeit von Trennmembranen zu schaffen.

Einen umfassenden Überblick zum Entwurf von Trennmembranen gibt der Formalismus zur Beschreibung von Trennmembranen mit einem aufgeprägten sinusförmigen Wellenmuster wird in "Flat and corrugated diaphragm design handbook" von Mario Di Giovanni gegeben, der an die die Arbeiten der Russen Feodos'ev und Andreeva anknüpft. Demanch gilt:

$$p := A(q) \cdot w + B(q) \cdot w^3 \qquad (3),$$

wobei Steifigkeitskoeffizienten A und B Funktionen einer Variablen q sind, die wiederum eine Funktion der Höhe des aufgeprägten Wellen musters ist, mit: $q^2 := 1{,}5*(H/h)^2+1$, wobei die Höhe des Prägemuster ist. Für weitere Einzelheiten der Funktionen A(q) und B(q) sei auf die Arbeit von Di Giovanni verwiesen. Mit zunehmender Höhe des Prägemusters wird jedenfalls A größer und B kleiner. Bei einem Membranentwurf ist also darauf abzustellen, welche maximale Aus-lenkung $w_{max}$ vorgesehen ist, um den Wert $p(w_{max})$ möglichst gering zu halten.

Wenn beispielsweise eine Trennmembran mit einem Wellenmuster für eine Auslenkung bis zu einem Wert $w_{max}$ = 5 entworfen werden soll, bedeutet dies einen Wert für p von etwa 140. Für eine Membran mit einem Radius a = 29 mm, einer Materialstärke h = 100 μm, und einem Elastizitätsmodul von 200 GPa bedeutet dies einen Membranfehler von etwa 40 mbar, wobei w unter der Annahme der oben beschriebenen Näherung mit einem Kegelvolumen etwa einer Volumenauslenkung von etwa 430 μl entspricht. Derartige Volumenauslenkungen können bei Kapillardruckmittlern durchaus vorkommen, und ein Messfehler von 40 mbar ist insbesondere bei kleinen Messbereichen von beispielsweise 100 mbar nicht akzeptabel. Die prinzipiellen Grenzen von Wellmembranen sind damit klar ersichtlich.

Membranen mit einer trapezförmigen oder stufenförmigen Kontur ermöglichen Membranentwürfe, bei denen der Wert für p(w) gegenüber vergleichbaren Wellmembranen etwa halbiert ist. Auch dies ist für viele Anwendungen noch nicht ausreichend.

Es ist daher die Aufgabe der vorliegenden Erfindung, Druckmittler und Druckmessaufnehmer mit solchen Druckmittlern bereitzustellen, welche die genannten Nachteile des Stands der Technik überwinden.

Die Aufgabe wird erfindungsgemäß gelöst durch den Druckmittler gemäß dem unabhängigen Patentanspruch 1 und den Drucksensor gemäß des unabhängigen Anspruchs 14.

Der erfindungsgemäße Druckmittler umfasst

einen Druckmittlerkörper mit einer Oberfläche, und

eine Trennmembran, die mit dem Druckmittlerkörper entlang einer umlaufenden Dichtfläche druckdicht verbunden ist,

wobei zwischen der Oberfläche des Druckmittlerkörpers und der Trennmembran eine Druckkammer gebildet ist, deren Volumen V von der Lage der Trennmembran abhängig ist,

wobei die Trennmembran eine Materialstärke h aufweist,

wobei die Trennmembran einen auslenkbaren Arbeitsbereich mit einer Fläche A aufweist, der durch die Dichtfläche begrenzt ist, wobei

wobei die Trennmembran eine aufgeprägte Kontur aufweist,

wobei die Trennmembran eine Referenzlage aufweist in der die Druckkammer ein Referenzvolumen $V_{ref}$ enthält,

wobei die Trennmembran aus der Referenzlage heraus in beide Richtungen mindestens so weit im wesentlichen axisymmetrisch auslenkbar ist, dass das Volumen der Druckkammer zwischen einem Wert bis zu $V_{ref}$ +/- $\Delta V_{soll}$ variiert werden kann,

wobei einer Volumenänderung $\Delta V$ ein dimensionsloses Auslenkungsmaß w zugeordnet ist welches definiert ist als $w(\Delta V) := (3 * \Delta V) / (A * h)$,

wobei $\Delta V_{soll}$ so bemessen ist, das gilt $|w(\Delta V_{soll})| \geq 2,5$;

dadurch gekennzeichnet,

dass die Trennmembran bei allen $w(\Delta V)$, für die gilt $|w(\Delta V)| \leq |w'(\Delta V)|$, wobei $|w'(\Delta V)| \geq 0,5*|w(\Delta V_{soll})|$, einen zusätzlichen, in erster Nährung nicht axisymmetrischen Auslenkungsmodus aufweist, welcher der axisymmetrischen Auslenkung um $w(\Delta V)$ überlagert ist.

Gemäß einer Weiterbildung der Erfindung beträgt die Auslenkung des antisymmetrischen Auslenkungsmodus bei $|w(\Delta V)|=0,4*|w(\Delta V_{soll})|$ mindestens das 0,3-fache, bevorzugt mindestens das 0,4-fache und weiter bevorzugt mindestens das 0,5-fache der maximalen Auslenkung des nicht axisymmetrischen Auslenkungsmodus.

Eine axisymmetrischen Auslenkung $zs(r, \varphi, \Delta V)$ ist eine volumenabhängige Auslenkung der z-Koordinate der einzelnen Punkte $(z, r, \varphi)$ einer Trennmembran

$$zs(r, \varphi, \Delta V) := z(r, \varphi, \Delta V) - z(r, \varphi, 0),$$

wobei gilt:

$$zs(r, \varphi, \Delta V) \cong z(r, \varphi+180°, \Delta V).$$

Vorzugsweise gilt insbesondere:

$$z(r, \varphi, 0) \cong z(r, \varphi+180°, 0)$$

Der nicht axisymmetrische Auslenkungsmodus kann beispielsweise ein antisymmetrischer Auslenkungsmodus sein, der beispielsweise definiert durch eine Funktion $zas(r, \varphi, \Delta V)$ für die gilt:

$$zas(r, \varphi, \Delta V) \cong - zas(r, \varphi+180°, \Delta V)$$

wobei der Wert für zas(r, φ, ΔV) gegeben ist als die Differenz der tatsächlichen z-Koordinate eines Punkts der Oberfläche der Trennmembran und der z-Koordinate des Punktes bei einer symmetrischen Auslenkung der Trennmembran:

$$zas(r, φ, ΔV) := z(r, φ, ΔV) - zs(r, φ, ΔV),$$

wobei die Funktion zs(r, φ, ΔV) so zu wählen ist, dass Integral des Quadrats von zas(r, φ, ΔV) über die Fläche des Arbeitsbereichs ein Minimum aufweist und insbesondere den Wert Null annimmt.

Nach einer Weiterbildung der Erfindung bedeutet das Kriterium, dass die Auslenkung des nicht axisymmetrischen Auslenkungsmodus |w(ΔV)|=0,4*|w(ΔV$_{soll}$)| mindestens das 0,3-fache, bevorzugt mindestens das 0,4-fache und weiter bevorzugt mindestens das 0,5-fache der maximalen Auslenkung des nicht axisymmetrischen Auslenkungsmodus beträgt, für den Fall das der nicht axisymmetrischen Auslenkungsmodus den antisymmetrischer Auslenkungsmodus ist, dass die Integrale von |zas(r, φ, 0,4*ΔV)| und |zas(r, φ, -0,4*ΔV)| jeweils mindestens das 0,3-fache, bevorzugt mindestens das 0,4-fache und weiter bevorzugt mindestens das 0,5-fache der maximalen Auslenkung des antisymmetrischen Auslenkungsmodus betragen, insbesondere der Auslenkung des antisymmetrischen Auslenkungsmodus in der Referenzlage |zas(r, φ, 0|.

Nach einer Weiterbildung der Erfindung kann die Funktion zas(r, φ, ΔV) separierbar sein:

$$zas(r, φ, ΔV) := zasr(r, ΔV) * zasphi(φ),$$

wobei zasphi(φ) beispielsweise cos(phi) sein kann.

Nach einer Weiterbildung der Erfindung gilt ein Auslenkungsmodus dann noch als antisymmetrisch im Sinne der Erfindung, wenn bei einem gegebenen ΔV für den Maximalwert von |zas(r, φ, ΔV)| folgendes Kriterium für die Abweichung von einer strikten Antisymmetrie eingehalten wird: [|zas(r, φ, ΔV)+ zas(r, φ+180°, ΔV)|] / [|zas(r, φ, ΔV)- zas(r, φ+180°, ΔV)|] ≤ 0,2, insbesondere ≤ 0,1, bevorzugt ≤ 0,05 und besonders bevorzugt ≤ 0,025.

Der antisymmetrische Auslenkungsmodus weist gemäß einer Weiterbildung der Erfindung eine dimensionslose maximale Auslenkung k auf, die definiert ist als:

$$k := \text{Maximum}([|zas(r, φ, ΔV)- zas(r, φ+180°, ΔV)|] /h),$$

und für die gilt: |k| ≥ 2, vorzugsweise |k| ≥ 3, wobei die maximale Auslenkung in einer derzeit bevorzugten Ausgestaltung der Erfindung nahe der Referenzlage der Trennmembran auftritt, d.h. wenn die Auslenkung der Trennmembran w weniger als +/- 0,2 w$_{soll}$, insbesondere weniger als 0,1 w$_{soll}$, und bevorzugt weniger als 0,05 w$_{soll}$ beträgt, wobei w$_{soll}$= w(ΔV$_{soll}$).

In einer Weiterbildung der Erfindung gilt weiterhin |k| ≤ 6, vorzugsweise |k| ≤ 5, weiter bevorzugt |k| ≤ 4.

In einer Weiterbildung der Erfindung beträgt die Auslenkung k des antisymmetrischen Auslenkungsmodus bei |wΔV)|=0,5*|w(V$_{soll}$)| mindestens das 0,4-fache, bevorzugt mindestens das 0,5-fache der maximalen Auslenkung des antisymmetrischen Auslenkungsmodus.

Die Auslenkung w(r,φ) des antisymmetrischen Auslenkungsmodus ist definiert als die Abweichung von einer rotationssymmetrischen Auslenkung y(r), die bezogen ist bezogen auf die Referenzlage der Trennmembran.

In einer Weiterbildung der Erfindung ist die Trennmembran aus der Referenzlage bis zu einer Auslenkung von |w(V$_{soll}$)| ≥ 3, vorzugsweise ≥ 4, weiter bevorzugt ≥ 5 und besonders bevorzugt ≥ 6 auslenkbar.

In einer Weiterbildung der Erfindung gilt für den dimensionslosen Druck beispielsweise: |p(w(V$_{soll}$)) - p(w(-ΔV$_{soll}$)|/w(ΔV$_{soll}$) - w(-ΔV$_{soll}$)| ≤ (|w(ΔV$_{soll}$)| + 2)*2, vorzugsweise ≤ (|w(ΔV$_{soll}$)| + 2), besonders bevorzugt ≤ (|w(ΔV$_{soll}$)| + 2) /2.

In einer Weiterbildung der Erfindung gilt für den dimensionslosen Druck beispielsweise bei allen w mit |w| ≤ (|w(ΔV$_{soll}$)-0,2|:

|p(w+0,2) - P(w-0,2|, 0,4 ≤ (|w| + 2)*2, vorzugsweise ≤ (|w| + 2), besonders bevorzugt ≤ (|w| + 2) /2.

In einer Weiterbildung der Erfindung gilt für den dimensionslosen Druck der Trennmembran für einen Auslenkungsbereich der definiert ist durch |w| ≤ 4: |p(w+0,2) - p(w-0,2)| / 0,4 ≤ 4, vorzugsweise ≤ 3.

Die Kontur der Trennmembran weist gemäß einer Weiterbildung der Erfindung einen zentralen, ebenen Bereich auf, der von einem gewellten Bereich mit vorzugsweise konzentrischen Wellenzügen umgeben ist. Gemäß einer Weiterbildung der Erfindung hat der zentrale Bereich hat vorzugsweise einen Durchmesser von nicht mehr als 2*a/3. besonders bevorzugt nicht mehr als a/2, wobei a der Radius des Arbeitsbereichs der Trennmembran ist.

Die Amplitude der Wellenzüge des gewellten Bereichs muss nicht konstant sein. In einer derzeit bevorzugten Ausgestaltung nimmt die Amplitude der Wellenzüge von innen nach außen hin zunächst ab, wobei dann ein äußerster Wellenzug anschließt, der wieder eine größere Amplitude aufweisen kann.

Die Amplitude des an den äußersten Wellenzug angrenzenden Wellenzug kann beispielsweise etwa 1/3 bis 2/3 der Amplitude des an den zentralen Bereich anschließenden Wellenzugs aufweisen.

Die Wellenzüge weisen, abgesehen vom äußersten Wellenzug, gemäß einer Weiterbildung der Erfindung beispielsweise eine maximale Amplitude von nicht mehr als 4 h vorzugsweise nicht mehr als 3 h und weiter bevorzugt nicht mehr als 2 h auf.

Die Wellenzüge weisen, abgesehen vom äußersten Wellenzug gemäß einer Weiterbildung der Erfindung, Wellenlänge auf, die von einem Wellenzug zum nächsten Wellenzug um nicht mehr als 20%, vorzugsweise nicht mehr als 10% variieren.

Der antisymmetrische Auslenkungsmodus kann nach einer Ausgestaltung der Erfindung nach dem Prägen der Kontur durch eine weite, ggf. beidseitige, symmetrische Auslenkung der Trennmembran, ermöglicht werden, beispielsweise zu Werten von |w| > 5. Danach kann die Trennmembran bei geeignet vorgegebener Kontur in der Referenzlage ggf. den antisymmetrischen Auslenkungsmodus im gewünschten Umfang aufweisen.

Weiterhin kann der antisymmetrische Auslenkungsmodus nach einer anderen Ausgestaltung der Erfindung durch Prägen der Membran auf einem Membranbett angeregt werden, dessen Achse gegenüber der Achse der Dichtfläche leicht geneigt ist, beispielsweise nicht weniger als etwa 1°, weiter bevorzugt nicht weniger als 2°. Ein Neigungswinkel von mehr als 4° ist nach derzeitiger Auffassung nicht erforderlich.

Nach einer Weiteren Ausgestaltung der Erfindung kann der antisymmetrische Auslenkungsmodus durch eine nicht axisymmetrische Temperaturbeaufschlagung von Zonen der Membran oder durch unsymmetrisch einwirkende andere Störgrößen wie Magnetfelder angeregt werden.

In einer weiteren Ausgestaltung der Erfindung kann eine Trennmembran eines mit Übertragungsflüssigkeit befüllten Druckmittlers mit einem Arbeitspunkt in der Referenzlage beispielsweise in einer Zone um einen Punkt $(r, \varphi)$ mittels eines geeigneten Körpers kontrolliert verformt bzw. eingedrückt werden, wodurch eine entsprechende entgegengesetzte Verformung in einer Zone um den Punkt $(r, -\varphi)$ hervorgerufen wird.

Die genannten Ansätze zum Herbeiführen des antisymmetrischen Auslenkungsmodus sind selbstverständlich beliebig miteinander kombinierbar. Ein erfindungsgemäßer Drucksensor umfasst, ein hydraulisches Messwerk, welches eine Druckmesszelle mit einem Druckwandler zum Ausgeben eines druckabhängigen elektrischen oder optischen Signals enthält, wobei das Messwerk mindestens einen hydraulischen Pfad und mindestens einen Druckmittler gemäß einem der vorhergehenden Ansprüche aufweist, und wobei die Druckmesszelle über den mindestens einen hydraulischen Pfad der sich von der Druckkammer des Druckmittlers zu der Druckmesszelle erstreckt, mit mindestens einem Druck beaufschlagbar ist.

Die Erfindung wird nun anhand der in den Zeichnungen dargestellten Ausführungsbeispiele erläutert. Es zeigt:

Fig. 1a: einen Längsschnitt durch einen erfindungsgemäßen Druckmittler;

Fig. 1b: eine Darstellung der Simulation der Radialspannungen in der Trennmembran eines erfindungsgemäßen Druckmittlers;

Fig. 1c: eine Darstellung der Simulation der Tangentialspannungen in der Trennmembran eines erfindungsgemäßen Druckmittlers;

Fig. 2: eine Unterziehkurve dp(V) eines erfindungsgemäßen Druckmittlers (gefüllte Dreiecke) im Vergleich zu einer Unterziehkurve eines Druckmittlers nach dem Stand der Technik (offene Quadrate);

Fig. 3a: eine Darstellung des dimensionslosen Drucks p als Funktion der dimensionslosen Auslenkung w eines erfindungsgemäßen Druckmittlers (gefüllte Dreiecke) im Vergleich zu entsprechenden Daten eines Druckmittlers nach dem Stand der Technik (offene Quadrate), die jeweils aus den Unterziehkurven in Fig. 2 folgen;

Fig. 3b: die Ableitungen $\partial p / \partial w$ der Daten p(w) aus Fig. 3a; und

Fig. 3c: ein Beispiel für die Auswahl eines Arbeitspunktes bzw. eine Referenzlage für die Druckmittler mit den Unterziehkurven aus Fig. 2.

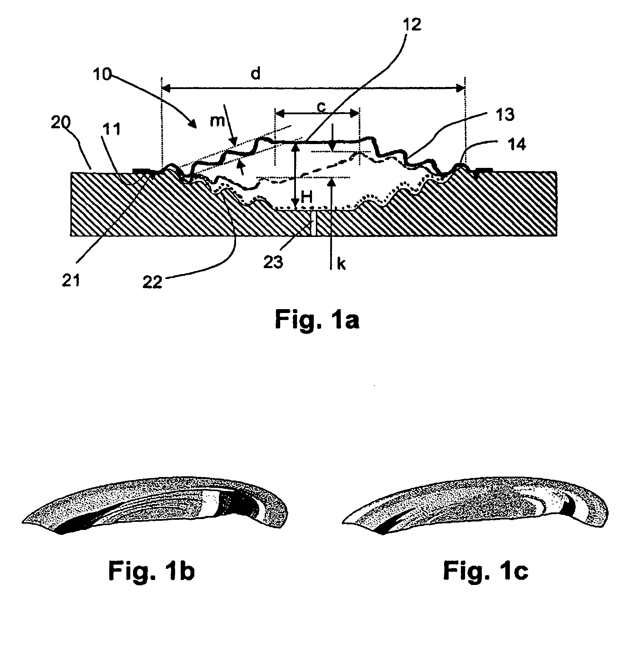

Der in Fig. 1a gezeigte Querschnitt durch einen erfindungsgemäßen Druckmittler zeigt eine Trennmembran 10, mit einem Randbereich 1, der einen auslenkbaren Arbeitsbereich umgibt. Der Arbeitsbereich umfasst einen ebenen zentralen Bereich 12, der von einem Bereich mit Wellenzügen 13 umgeben ist, deren Amplitude zunächst von innen nach außen abnimmt, bis dann ein äußerster Wellenzug 14 folgt, der wieder eine größere Amplitude aufweist, und der u. a. zur Entkopplung einer Schweißnaht 21, mit dem die Trennmembran 10 an einem Druckmittlerkörper 20 befestigt ist, von den Auslenkungen des Arbeitsbereichs dient. Der Druckmittlerkörper 20 weist ein Membranbett 22 auf, welches im wesentlichen die Kontur der Trennmembran 10 aufweist, wobei die Kontur der Trennmembran beispielsweise durch Abprägen einer zuvor angeschweißten, ebenen Membranronde auf dem Membranbett erzeugt sein kann. Zwischen der Trennmembran 10 und dem dem Membranbett 22 ist eine Druckkammer gebildet, die über eine Öffnung 23, die sich vom Membranbett durch den Druckmittlerkörper erstreckt, mit einem hydraulischen Pfad kommuniziert, um eine Druckmesszelle mit einem Druck zu beaufschlagen.

Die Trennmembran wiest beispielsweise einen Edelstahl mit einem Elatizitätsmodul von etwa 210 GPa auf. Die Materialstärke beträgt beim diesem Ausführunsbeispiel etwa h= 100 $\mu$m. Der Durchmesser d (= 2a) des Arbeitsbereichs, der durch die Schweißnaht 21 begrenzt ist, beträgt etwa 58 mm.

Die Trennmembran ist um eine Referenzlage die etwa durch die Ebene der Schweißnaht 21 definiert ist um etwa $\Delta V = \pm 600$ $\mu$l auslenkbar.

Dieser Volumenänderung $\Delta V$ entspricht eine dimensionslose Auslenkung von w = $\pm$ 6,8, bzw. einem Hub H von ungefähr 2·w·h = 1,36 mm.

Der Zusammenhang zwischen H und w ist naturgemäß nur eine Abschätzung, um die Größenordnung anzugeben, denn w wird aus $\Delta V$ unter der Annahme eines kegelförmigen Volumenhubs ermittelt, der bei der dargestellten Membranform offensichtlich nicht exakt stimmen kann.

Der ebene Zentrale Bereich 12 der Messmembran 10 hat einen Durchmesser von etwa einem halben Radius. An den zentralen Bereich schließen drei Wellenzüge etwa gleicher Wellenlänge an, deren Einhüllende an den zentralen Bereich angrenzend einen Abstand m von etwa 4h aufweist, wobei dieser Abstand bei dem Von dem zentralen Bereich nach außen beim an den äußersten Wellenzug angrenzenden Wellenzug auf 2h abgefallen ist.

Die Auslenkung der Trennmembran zur Erzielung des Volumenhubs $\Delta V$ ist in im wesontlichen eine axisymmetrische Auslenkung, der allerdings bel der erfindungsgemäßen Trennmembran eine nicht axisymmetrische insbesondere antisymmetrische Auslenkung überlagert ist, wobei diese nich axisymmetrische Auslenkung ihr Maximum etwa dann aufweist, wenn sich die Trennmembran in der Referenzlage befindet. Das Maximum der Auslenkung des nicht axisymmetrischen Auslenkungsmodus kann beispielsweise einen Wert von k= etwa 2·h bis 5·h aufweisen.

Mit einer Auslenkung der Trennmembran aus der Referenzlage nimmt die Auslenkung des nicht axisymmetrischen Auslenkungsmodus ab, wobei die Auslenkung des nicht axisymmetrischen Auslenkungsmodus bei einer Auslenkung der Trennmembran zu w($\Delta V_{soll}$) ganz verschwunden sein kann.

Fign. 1 b und 1 c zeigen die Ergebnisse von FEM-Simulationen einer Trennembran eines erfindungsgemäßen Druckmittlers in der bzw. nahe der Referenzlage, wobei die Graustufen in Fig. 1 b Radialspannungen und in Fig. 1c Tangentialspannungen darstellen. In den Darstellungen ist klar erkennbar, dass die Spannungsmaxima, nahe der Extrema des nicht axisymmetrischen Modus auftreten, während die Trennmembran in einer Richtung senkrecht dazu, in welcher die nicht axisymmetrische Auslenkung im wesentlichen einen Wert von Null aufweist, vergleichsweise wenig bzw. keine Spannungen aufweist.

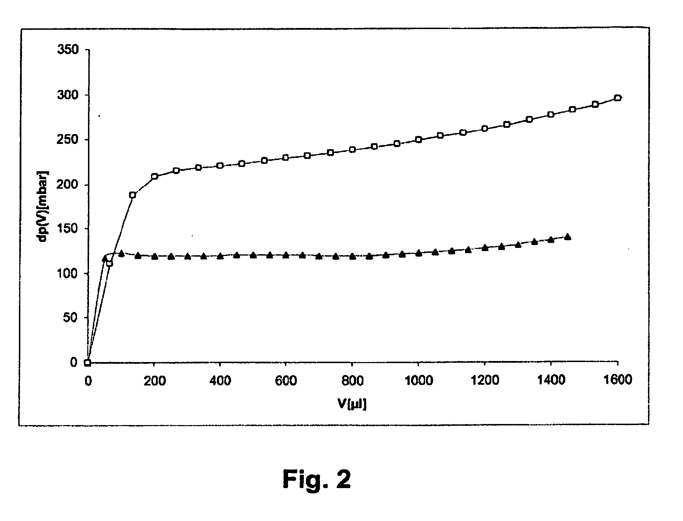

Fig. 2 zeigt eine so genannte Unterziehkurve p(V) von einem erfindungsgemäßen Druckmittler (gefüllte Dreiecke) im Vergleich zu einer Unterziehkurve eines Druckmittlers nach dem Stand der Technik. Eine Unterziehkurve stellt den Druck in der Druckkammer als Funktion des in der Druckkammer befindlichen Ölvolumens dar Die absolute Lage der Druckwerte der beiden Kurven ist weniger beachtlich. Wesentlich ist vielmehr die Frage, wie sich der Druck als Funktion des Volumens ändert.

Der steile Abfall zum Volumen Null hin, ergibt sich daraus, dass die Trennmembran bei diesem Wert vollständig an einem Membranbett anliegt, und damit die mechanischen Eigenschaften mit zunehmender Anlagefläche nicht mehr von der Trennmembran alleine bestimmt sind.

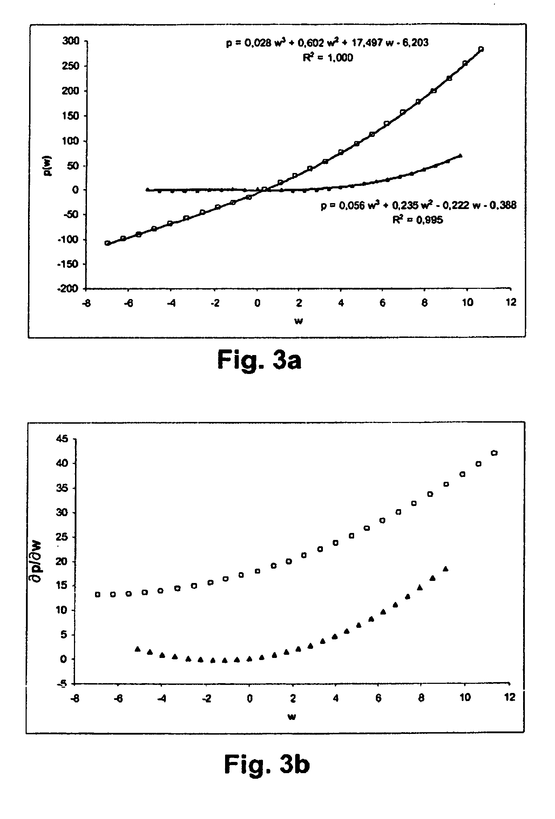

Die dimensionslosen Kurven in Fig. 3a sind aus den Daten in Fig. 2 anhand der Gleichungen (1) und (2) abgeleitet, wobei eine Koordinatenverschiebung erfolgte mit:

$$w := w(V - V_{ref}),$$

und

$$p := p(dp(V) - dp(V_{ref})).$$

Hierbei wurde für das Membranmaterial ein Elastizitätsmodul von 210 GPa, eine Membranstärke von 100 $\mu$m und ein Durchmesser von 59 mm für den Arbeitsbereich der Trennmembran nach dem Stand der Technik bzw. 58 mm für den Arbeitsbereich der Trennmembran des erfindungsgemäßen Druckmittlers angesetzt.

Anhand der Messdaten wurde jeweils ein Fit mit einem Polynom dritter Ordnung mit den in Fig. 3a gezeigten Werten generiert. Fig. 3b zeigt, die Ableitungen $\partial p / \partial w$ der gefitteten Funktionen aus Fig. 3a.

Fign. 3a und 3b geben einen Eindruck davon, welche Verbesserung mit einer erfindungsgemäßen Membran gegenüber einer Membran nach dem Stand der Technik erzielbar ist.

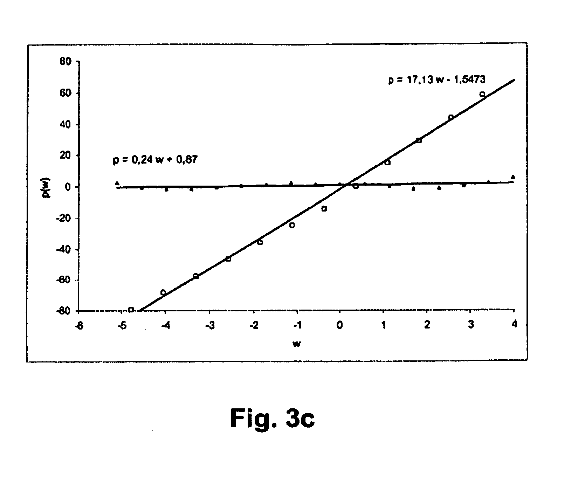

Insoweit, als bei einem Druckmittler über die Wahl der Menge der Übertragungsflüssigkeit in der Druckkammer, der Arbeitspunkt und die Referenzlage in gewissen Grenzen verschiebbar ist, kann der Druckmittler weiter optimiert werden. Fig. 3c zeigt hierzu ein Beispiel in dem p(w) über einen Bereich von -5 <w< 4 im vergleich zu entsprechenden Daten des Druckmittlers nach dem Stand der Technik aufgetragen ist. Für den ausgewählten Bereich wurde zudem jeweils ein linearer Fit überlagert.

Hier zeigt der erfindungsgemäße Druckmittler über den gesamten Bereich gefittet eine Steigung von $\partial p / \partial w$ = 0,24 an im Vergleich zu $\partial p / \partial w$ = 17 nach dem Stand der Technik. Es ist absehbar, dass ein linearer Fit für eine Fehlerkompensation in der Praxis vermutlich nicht ausreicht, auf diese Weise lässt sich aber die Gesamtgröße des zu kompensierenden Fehlers gut abschätzen und mit der entsprechenden Größe von Druckmittlem nach dem Stand der Technik vergleichen.

Ein Wertebereich von w($\Delta V_{soll}$) - w($-\Delta V_{soll}$) = 4 - (-5) = 9 entspricht bei einer Membran mit einem Arbeitsbereichsradius von 28 mm und einer Materialstärke von 100 $\mu$m einem Arbeitsvolumen von 2 $\Delta V_{soll}$ = 792 $\mu$l. Geht man von der ermittelten Steigung aus $\partial p / \partial w$ = 0,24, folgt über den beschriebenen Bereich eine Veränderung des volumenabhängigen Drucks von weniger als 1 mbar. Dies ist ein beachtlicher Fortschritt gegenüber dem Stand der Technik.

## Patentansprüche

1. Druckmittler, umfassend:

   einen Druckmittlerkörper (20) mit einer Oberfläche, und
   eine Trennmembran (10), die mit dem Druckmittlerkörper (20) entlang einer umlaufenden Dichtfläche (21) druckdicht verbunden ist,
   wobei zwischen der Oberfläche des Druckmittlerkörpers (20) und der Trennmembran (10) eine Druckkammer gebildet ist, deren Volumen V von der Lage der Trennmembran abhängig ist,
   wobei die Trennmembran (10) eine Materialstärke h und einem auslenkbaren Arbeitsbereich mit einer Fläche A aufweist, der durch die Dichtfläche begrenzt ist, wobei
   wobei die Trennmembran (10) eine aufgeprägte Kontur (13) aufweist,
   wobei die Trennmembran (10) eine Referenzlage aufweist in der die Druckkammer ein Referenzvolumen $V_{ref}$ enthält,
   wobei die Trennmembran aus der Referenzlage heraus in beide Richtungen mindestens so weit auslenkbar ist, dass das Volumen der Druckkammer zwischen einem Wert bis zu $V_{ref}$ +/- $\Delta V_{soll}$ variiert werden kann,
   wobei einer Volumenänderung $\Delta V$ ein dimensionsloses Auslenkungsmaß w zugeordnet ist welches definiert ist als

$$w(\Delta V) := (3 \cdot \Delta V) / (A \cdot h),$$

   wobei $\Delta V_{soll}$ so bemessen ist, das gilt $|w(\Delta V_{soll})| \geq 2,5$;
   **dadurch gekennzeichnet,**
   **dass** die Trennmembran bei allen w($\Delta V$), für die gilt $|w(\Delta V)| \leq |w'(\Delta V)|$, wobei $|w'(\Delta V)| \geq 0,5 \cdot |w(\Delta V_{soll})|$, einen zusätzlichen nicht axisymmetrischen Auslenkungsmodus aufweist, welcher der axisymmetrischen Auslenkung um w($\Delta V$) überlagert ist,
   wobei insbesondere die Auslenkung des nicht axisymmetrischen Auslenkungsmodus bei $|w(\Delta V)| = 0,4 \cdot |w(\Delta V_{soll})|$ mindestens das 0,3-fache, bevorzugt mindestens das 0,4-fache und weiter bevorzugt mindesten das 0,5-fache der maximalen Auslenkung des nicht axisymmetrischen Auslenkungsmodus beträgt.

**2.** Druckmittler nach Anspruch 1, wobei der nicht axisymmetrische Auslenkungsmodus, einen in erster Näherung ein antisymmetrischen Auslenkungsmodus umfasst, der definiert ist durch eine Funktion zas(r, φ, ΔV) für die gilt:

$$zas(r, φ, ΔV) \cong - zas(r, φ+180°, ΔV)$$

wobei der Wert für zas(r, φ, ΔV) gegeben ist als die Differenz der tatsächlichen z-Koordinate eines Punkts der Oberfläche der Trennmembran und der z-Koordinate des Punktes bei einer symmetrischen Auslenkung der Trennmembran:

$$zas(r, φ, ΔV) := z(r, φ, ΔV) - zs(r, φ, ΔV),$$

wobei die Funktion zs(r, φ, ΔV) so zu wählen ist, dass Integral des Quadrats von zas(r, φ, ΔV) über die Fläche des Arbeitsbereichs ein Minimum aufweist.

**3.** Druckmittler nach Anspruch 2, wobei ein Auslenkungsmodus dann als antisymmetrisch gilt, wenn bei einem gegebenen ΔV für den Maximalwert von |zas(r, φ, ΔV)| folgendes Kriterium für die Abweichung von einer strikten Antisymmetrie eingehalten wird:

[|zas(r, φ, ΔV)+ zas(r, φ+180°, ΔV)|] / [|zas(r, φ, ΔV)- zas(r, φ+180°, ΔV)|] ≤ 0,2, insbesondere ≤ 0,1, bevorzugt ≤ 0,05.

**4.** Druckmittler nach Anspruch 2 oder 3, wobei der antisymmetrische Auslenkungsmodus eine dimensionslose maximale Auslenkung k aufweist, die definiert ist als

$$k := Maximum([|zas(r, φ, ΔV)- zas(r, φ+180°, ΔV)|] /h),$$

für die gilt: |k| ≥ 2, vorzugsweise |k| ≥ 3.

**5.** Druckmittler nach Anspruch 4, wobei die maximale Auslenkung des antisymmetrische Auslenkungsmodus nahe der Referenzlage der Trennmembran auftritt, wenn die Auslenkung der Trennmembran w weniger als +/- 0,2 $w_{soll}$, insbesondere weniger als 0,1 $w_{soll}$, und bevorzugt weniger als 0,05 $w_{soll}$ beträgt.

**6.** Druckmittler nach Anspruch 4 oder 5, wobei die für die maximale Auslenkung k des antisymmetrischen Auslenkungsmodus weiterhin gilt: |k| ≤ 6, vorzugsweise |k| ≤ 5, weiter bevorzugt |k| ≤ 4.

**7.** Druckmittler nach einem der vorhergehenden Ansprüche wobei für den dimensionslosen Druck p' gilt:

$$|p(w(ΔV_{soll})) - p(w(-ΔV_{soll}))| / |w(ΔV_{soll}) - w(-ΔV_{soll})| ≤ (|w(ΔV_{soll})| + 2)*2,$$

vorzugsweise ≤ (|w(ΔV_{soll})| + 2),
besonders bevorzugt ≤ (|w(ΔV_{soll})| + 2) /2.

**8.** Druckmittler nach einem der vorhergehenden Ansprüche, wobei für den dimensionslosen Druck p bei allen w mit |w| ≤ (|w(ΔV_{soll})-0,2| gilt:

$$|p(w+0,2) - p(w-0,2)| / 0,4 ≤ (|w| + 2)*2,$$

vorzugsweise ≤ (|w| + 2),

besonders bevorzugt ≤ (|w| + 2) /2.

9. Druckmittler nach einem der vorhergehenden Ansprüche, wobei die Kontur der Trennmembran einen zentralen, ebenen Bereich aufweist, der von einem gewellten Bereich mit vorzugsweise konzentrischen Wellenzügen umgeben ist.

10. Druckmittler nach einem der vorhergehenden Ansprüche, wobei die Amplitude der Wellenzüge zunächst von innen nach außen hin abnimmt, wobei dann ein äußerster Wellenzug anschließt, der wieder eine größere Amplitude aufweist.

11. Druckmittler nach Anspruch 10, wobei die Amplitude des an den äußersten Wellenzug angrenzenden Wellenzug etwa 1/3 bis 2/3 der Amplitude des an den zentralen Bereich anschließenden Wellenzugs aufweist.

12. Druckmittler nach Anspruch 11, wobei die die Wellenzüge abgesehen vom äußersten Wellenzug eine maximale Amplitude von nicht mehr als 4 h vorzugsweise nicht mehr als 3 h und weiter bevorzugt nicht mehr als 2 h aufweisen.

13. Druckmittler nach einem der Ansprüche 9 bis 12, wobei die Wellenzüge abgesehen vom äußersten vom äußersten Wellenzug eine Wellenlänge aufweisen, die von einem Wellenzug zum nächsten Wellenzug um nicht mehr als 20%, vorzugsweise nicht mehr als 10% variieren.

14. Drucksensor, umfassend:

ein hydraulisches Messwerk, welches eine Druckmesszelle mit einem Druckwandler zum Ausgeben eines druckabhängigen elektrischen oder optischen Signals enthält, wobei das Messwerk mindestens einen hydraulischen Pfad und mindestens einen Druckmittler gemäß einem der vorhergehenden Ansprüche aufweist, und wobei die Druckmesszelle über den mindestens einen hydraulischen Pfad der sich von der Druckkammer des Druckmittlers zu der Druckmesszelle erstreckt, mit mindestens einem Druck beaufschlagbar ist.

**Claims**

1. Diaphragm seal, comprising:

a diaphragm seal body (20) with a surface, and
a process isolating diaphragm (10) which is connected to the diaphragm seal body (20) pressure-tight along a circumferential sealing surface (21)
wherein a pressure chamber is formed between the surface of the diaphragm seal body (20) and the process isolating diaphragm (10), the volume V of said pressure chamber being dependent on the position of the process isolating diaphragm
wherein the process isolating diaphragm (10) has a material thickness h and a deflectable working region with an area A which is bordered by the sealing surface,
wherein the process isolating diaphragm (10) has an embossed contour (13)
wherein the process isolating diaphragm (10) has a reference position in which the pressure chamber has a reference volume $V_{ref}$
wherein, from the reference position, the process isolating diaphragm can be deflected in both directions at least to the extent that the volume of the pressure chamber can be varied between values of up to $V_{ref}$ +/- $\Delta V_{target}$
wherein a dimensionless deflection measure w is assigned to a volume change $\Delta V$, said deflection measure defined as

$$w(\Delta V) := (3 \cdot \Delta V)/(A \cdot h)$$

wherein $\Delta V_{target}$ is such that $|w|(\Delta V_{target})| \geq 2.5$ ;
**characterized in that**
in the case of all $w(\Delta V)$, for which $|w(\Delta V)| \leq |w'(\Delta V)|$, wherein $|w'(\Delta V)| \geq 0.5 |w(\Delta V_{target})|$, the process isolating diaphragm has an additional non-axisymmetric deflection mode, which is superimposed on the axisymmetric deflection of $w(\Delta V)$

wherein, in particular, the deflection of the non-axisymmetric deflection mode at $|w(\Delta V)|=0.4|w(\Delta V_{target})|$ is at least 0.3 times, preferably at least 0.4 times and preferably still at least 0.5 times the maximum deflection of the non-axisymmetric deflection mode.

2. Diaphragm seal as claimed in Claim 1, wherein the non-axisymmetric deflection mode comprises, to a first approximation, an antisymmetric deflection mode which is defined by a function zas(r, φ, Δ V) for which the following applies:

$$zas(r, \varphi, \Delta V) \cong -zas(r, \varphi+180°, \Delta V)$$

wherein the value for zas(r, φ, Δ V) is given as the difference of the actual z-coordinate of a point of the surface of the process isolating diaphragm and the z-coordinate of the point at a symmetric deflection of the process isolating diaphragm:

$$zas(r, \varphi, \Delta V): = z(r, \varphi, \Delta V) - zs(r, \varphi, \Delta V)$$

wherein the function zs(r, φ, ΔV) must be selected in such a way that the integral of the square of zas(r, φ, Δ V) exhibits a minimum over the area of the working region.

3. Diaphragm seal as claimed in Claim 2, wherein a deflection mode is considered antisymmetric if the following criterion is observed for the deviation from a strict antisymmetry at a given Δ V for the maximum value of |zas(r, φ, Δ V)|:

$$[|zas(r, \varphi, \Delta V)+zas(r, \varphi+180°, \Delta V)|]/[|zas(r, \varphi, \Delta V) - zas(r, \varphi+180°, \Delta V)|] \leq 0.2,$$

particularly $\leq 0.1$ and preferably $\leq 0.05$.

4. Diaphragm seal as claimed in Claim 2 or 3, wherein the antisymmetric deflection mode has a dimensionless maximum deflection k, which is defined as

$$k := maximum([|zas(r, \varphi, \Delta V) - zas(r, \varphi+180°, \Delta V)|]/h)$$

for which: $|k| \geq 2$, preferably $|k| \geq 3$.

5. Diaphragm seal as claimed in Claim 4, wherein the maximum deflection of the antisymmetric deflection mode occurs near the reference position of the process isolating membrane when the deflection of the process isolating membrane w is less than +/- $0.2w_{target}$, particularly less than $0.1w_{target}$, and preferably less than $0.05w_{target}$

6. Diaphragm seal as claimed in Claim 4 or 5, wherein furthermore the following applies for the maximum deflection k of the antisymmetric deflection mode: $|k| \leq 6$, preferably $|k| \leq 5$, and more preferably $|k| \leq 4$

7. Diaphragm seal as claimed in one of the previous claims, wherein the following applies for the dimensionless pressure p':

$$|p(w(\Delta V_{target})) - p(w(-\Delta V_{target}))|/|w(\Delta V_{target}) - w(-\Delta V_{target})| \leq (|w(\Delta V_{target})| +2)*2,$$

preferably $\leq (|w(\Delta V_{target})| +2)$,
particularly preferably $\leq (|w(\Delta V_{target})| +2) /2$

8. Diaphragm seal as claimed in one of the previous claims, wherein the following applies for the dimensionless pressure p for all w with $|w| \leq (|w(\Delta V_{target})-0.2|$: :

$$|p(w+0.2) - p(w-0.2)|/0.4 \leq (|w| + 2)*2,$$

 preferably $\leq (|w| + 2)$,
particularly preferably $\leq (|w| + 2)/2$

9.  Diaphragm seal as claimed in one of the previous claims, wherein the contour of the process isolating diaphragm has a central, planar area which is surrounded by a corrugated area with preferably concentric wave trains.

10.  Diaphragm seal as claimed in one of the previous claims, wherein the amplitude of the wave trains initially decreases from the inside to the outside, wherein this is then followed by an outermost wave train which again has a larger amplitude.

11.  Diaphragm seal as claimed in Claim 10, wherein the amplitude of the wave train adjoining the outermost wave train is about 1/3 to 2/3 of the amplitude of the wave train following from the central region.

12.  Diaphragm seal as claimed in Claim 11, wherein - apart from the outermost wave train - the wave trains have a maximum amplitude of not more than 4 h, preferably not more than 3 h and preferably still not more than 2 h.

13.  Diaphragm seal as claimed in Claims 9-12, wherein - apart from the outermost wave train - the wave trains have a wave length which does not vary more than 20%, and preferably not more than 10%, from one wave train to the next.

14.  Pressure sensor, comprising:

     A hydraulic measuring element, which contains a pressure measuring cell with a pressure converter to issue a pressure-dependent electrical or optical signal, wherein the measuring element has at least one hydraulic path and at least one diaphragm seal as claimed in one of the previous claims, and wherein the pressure measuring cell can be exposed to at least one pressure via the one hydraulic path at least, said path extending from the pressure chamber of the diaphragm seal to the pressure measuring cell.

**Revendications**

1.  Séparateur, comprenant :

    un corps de séparateur (20) avec une surface, et
    une membrane de séparation (10), laquelle est reliée, de façon étanche à la pression, avec le corps de séparateur (20) le long d'une surface d'étanchéité (21) périphérique,
    une chambre de pression étant formée entre la surface du corps de séparateur (20) et la membrane de séparation (10), chambre dont le volume V dépend de la position de la membrane de séparation,
    la membrane de séparation (10) présentant une épaisseur de matériau h et une zone de travail déviable avec une surface A, qui est délimitée par la surface d'étanchéité,
    la membrane de séparation (10) présentant un contour (13) gravé,
    la membrane de séparation (10) présentant une position de référence, dans laquelle la chambre de pression contient un volume de référence $V_{ref}$,
    la membrane de séparation (10) pouvant être déviée depuis la position de référence dans deux directions, au moins aussi loin pour que le volume de la chambre de pression puisse varier entre une valeur jusqu'à $V_{ref} \pm \Delta V_{théor}$,
    une cote de déviation w adimensionnelle étant attribuée à une variation de volume $\Delta V$, laquelle cote est définie comme suit :

$$w(\Delta V) := (3 \cdot \Delta V) / (A \cdot h),$$

où $\Delta V_{théor.}$ est dimensionné de telle manière que $|w(\Delta V_{théor.})| \geq 2,5$ ;

**caractérisé en ce**

**que** la membrane de séparation, pour tous les $w(\Delta V)$, pour lesquels s'applique $|w(\Delta V)| \leq |w'(\Delta V)|$, où $|w'(\Delta V)|) | \geq 0,5 \cdot |w(\Delta V_{théor.})|$, présente un mode de déviation non axisymétrique supplémentaire, lequel se superpose de la valeur $w(\Delta V)$ à la déviation axisymétrique.

la déviation du mode de déviation non axisymétrique pour $|w(\Delta V)| = 0,4 |w(\Delta V_{théor.})|$ étant notamment égale à au moins 0,3 fois, de préférence à au moins 0,4 fois et particulièrement de préférence à au moins 0,5 fois la déviation maximale du mode de déviation non axisymétrique.

2. Séparateur selon la revendication 1, pour lequel le mode de déviation non axisymétrique comprend à première approximation un mode de déviation antisymétrique, lequel est défini par une fonction zas(r, φ, ΔV), pour laquelle s'applique :

$$zas(r, \varphi, \Delta V) = - zas(r, \varphi + 180°, \Delta V)$$

où la valeur pour zas(r, φ, ΔV) est définie comme étant la différence de la coordonnée z effective d'un point de la surface de la membrane de séparation et de la coordonnée z du point pour une déviation symétrique de la membrane de séparation :

$$zas(r, \varphi, \Delta V) := z(r, \varphi, \Delta V) - zs(r, \varphi, \Delta V),$$

où la fonction zs(r, φ, ΔV) doit être choisie de telle manière que l'intégrale du carré de zas(r, φ, ΔV) présente un minimum sur la surface de la zone de travail.

3. Séparateur selon la revendication 2, pour lequel un mode de déviation est considéré comme antisymétrique lorsque, pour un ΔV défini pour la valeur maximale de $|zas(r, \varphi, \Delta V)|$, le critère suivant est respecté pour l'écart par rapport à une antisymétrie stricte :

$$[|zas(r, \varphi, \Delta V) + zas(r, \varphi + 180°, \Delta V)|] / [|zas(r, \varphi, \Delta V) - zas(r, \varphi + 180°, \Delta V)|] \leq 0,2,$$

notamment $\leq 0,1$, de préférence $\leq 0,05$.

4. Séparateur selon la revendication 2 ou 3, pour lequel le mode de déviation antisymétrique présente une déviation maximale adimensionnelle k, qui est définie comme suit :

$$k := maximum([|zas(r, \varphi, \Delta V) - zas(r, \varphi + 180°, \Delta V)|]/h),$$

avec : $|k| \geq 2$, de préférence $|k| \geq 3$.

5. Séparateur selon la revendication 4, pour lequel la déviation maximale du mode de déviation antisymétrique apparaît à proximité de la position de référence de la membrane de séparation lorsque la déviation de la membrane de séparation w s'élève à moins de $\pm 0,2\ w_{théor.}$, notamment à moins de $0,1\ w_{théor.}$ et de préférence à moins de $0,05\ w_{théor.}$.

6. Séparateur selon la revendication 4 ou 5, pour lequel les conditions suivantes restent valables pour la déviation maximale k du mode de déviation antisymétrique : $|k| \geq 6$, de préférence $|k| \leq 5$ et particulièrement de préférence $|k| \leq 4$.

7. Séparateur selon l'une des revendications précédentes, pour lequel les conditions suivantes sont valables pour la pression p' adimensionnelle :

$$|p(w(\Delta V_{théor.})) - p(w(-\Delta V_{théor.}))| / |w(\Delta V_{théor.}) - w(-\Delta V_{théor.})| \leq (|w(\Delta V_{théor.})| + 2)*2,$$

de préférence $\leq (|w(\Delta V_{théor.})| + 2)$
particulièrement de préférence $\leq (|w(\Delta V_{théor.})| + 2) / 2$.

**8.** Séparateur selon l'une des revendications précédentes, pour lequel s'appliquent les conditions suivantes concernant la pression p adimensionnelle pour tous les w avec $|w| \leq (|w(\Delta V_{théor.})-0,2|$ :

$$|p(w+0,2) - p(w-0,2)| / 0,4 \leq (|w| + 2) *2,$$

de préférence $\leq (|w| + 2)$,
particulièrement de préférence $\leq (|w| + 2) / 2$.

**9.** Séparateur selon l'une des revendications précédentes, pour lequel le contour de la membrane de séparation présente une zone médiane, plane, laquelle est entourée par une zone ondulée avec de préférence des trains d'ondes concentriques.

**10.** Séparateur selon l'une des revendications précédentes, pour lequel l'amplitude des trains d'ondes décroît dans un premier temps de l'intérieur vers l'extérieur, puis il s'ensuit un train d'onde extérieur, qui présente de nouveau une amplitude supérieure.

**11.** Séparateur selon la revendication 10, pour lequel l'amplitude du train d'ondes avoisinant le train d'ondes extérieur présente environ 1/3 à 2/3 de l'amplitude du train d'ondes jouxtant la zone médiane.

**12.** Séparateur selon la revendication 11, pour lequel les trains d'onde, à l'exception du train d'ondes extérieur, présentent une amplitude maximale inférieure à 4 h, de préférence inférieure à 3 h et particulièrement de préférence à 2 h.

**13.** Séparateur selon l'une des revendications 9 à 12, pour lequel les trains d'onde, à l'exception du train d'ondes extérieur, présentent une longueur d'onde, qui ne varie pas plus de 20 %, de préférence pas plus de 10 %, d'un train d'ondes à un autre.

**14.** Capteur de pression, comprenant :

un système de mesure hydraulique, lequel comprend une cellule de mesure de pression pourvue d'un convertisseur de pression destinée à l'émission d'un signal électrique ou optique en fonction de la pression, le système de mesure présentant au minimum un circuit hydraulique et au minimum un séparateur selon l'une des revendications précédentes, et la cellule de mesure de pression pouvant être soumise à au moins une pression par l'intermédiaire de l'au moins un circuit hydraulique, qui s'étend de la chambre de pression du séparateur à la cellule de mesure de pression.

**Fig. 1a**

**Fig. 1b**

**Fig. 1c**

EP 2 300 739 B1

**Fig. 2**

16

**Fig. 3a**

**Fig. 3b**

**Fig. 3c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19946234 C1
- DE 10031120 A1
- EP 1114987 B1
- DE 102005023021 A1
- DE 10152681 A1